# EUROPÄISCHE PATENTSCHRIFT

(11) **EP 1 477 016 B1**
(45) Veröffentlichungstag und Bekanntmachung des Hinweises auf die Patenterteilung: **19.04.2006**
(21) Anmeldenummer: 03704550.7
(22) Anmeldetag: 05.02.2003
(51) Int. Cl.: H04M 3/493

(54) **EFFIZIENTE AUSNUTZUNG VON FÜR VERMITTLUNGSSYSTEME BEREITGESTELLTEN IVR-RESSOURCEN**
EFFICIENT UTILIZATION OF IVR RESOURCES SUPPLIED TO SWITCHING SYSTEMS
EXPLOITATION EFFICACE DE RESSOURCES DE REPONSE VOCALE INTERACTIVE MISES A DISPOSITION POUR DES SYSTEMES DE COMMUTATION

(30) Priorität: 19.02.2002 EP 02003741
(43) Veröffentlichungstag der Anmeldung: 17.11.2004
(73) Patentinhaber: SIEMENS AKTIENGESELLSCHAFT, 80333 München (DE)
(72) Erfinder: LÖBIG, Norbert, 64291 Darmstadt (DE)
(86) Internationale Anmeldenummer: PCT/EP2003/001132
(87) Internationale Veröffentlichungsnummer: WO 2003/071771

(56) Entgegenhaltungen:
- EP-A- 1 156 649
- VOICE RESPONSE FOR AIX - SPEECH RECOGNITION WITH THE BBN HARK RECOGNIZER VERSION 2 RELEASE 2, 1999, Seiten 1-16, XP002150246

## Beschreibung

Die Erfindung betrifft ein IVR-System (interactive voice response system) zur Bereitstellung von Funktionen und Ressourcen für Dienste, die interaktive Sprachausgabe oder das Ausgeben von Ansagen umfassen, und drei Verfahren zur Behandlung von Ressourcenengpässen in dem IVR-System.

Viele Telekommunikationsdienste beinhalten das Ausgeben von Ansagen bzw. Dialogen. Derartige Dienste setzen voraus, dass die Vermittlungstechnik die dafür erforderliche Funktionalität zur Verfügung stellt.

Die vermittlungstechnischen Leistungsmerkmale der Dienste, die das Ausgeben von Ansagen und Dialogen erfordern, sind vielfach SCP (Service Control Point) basierte Leistungsmerkmale des "intelligenten Netzwerks" (Intelligent Network: Konzept der dezentralen Dienstesteuerung definiert in der Q.1200-Serie der ITU (International Telecommunications Union)). Für Dienste des Intelligent Network Konzepts, die das Ausgeben von Ansagen und das Durchführen von Dialogen vorsehen, ist die Bereitstellung von entsprechenden Basisfunktionen durch ein Vermittlungssystem erforderlich, auf das der SCP mit Hilfe des INAP (Intelligent Network Application Protocol) Protokolls zugreift.

Es können aber auch in einem Vermittlungssystem erkannte Situationen zum direkten, d.h. nicht durch einen SCP gesteuerten Ausgeben einer Standardansage (z.B.: "Kein Anschluss unter dieser Nummer") oder einer Ansage mit variablen Anteilen (z.B.: "Die Rufnummer hat sich geändert und ist 12345") führen. Darüber hinaus gibt es auch Dialoge, deren Logik bzw. Ablauf im Vermittlungssystem ohne SCP-Unterstützung realisiert ist. Diese sind vornehmlich zu finden im Bereich der vermittlungstechnischen Steuerung bzw. Einstellung von Merkmalen bzw. Features des Dienstes durch den Endteilnehmer oder bei Diensten, die die Durchschaltung zu Call Centern bzw. Telefonzentralen beinhalten.

Die automatisierte Ausgabe von Sprachinformationen, z.B. in Form von Ansagen, und die automatisierte Erkennung und Behandlung von Sprachinformationen, z.B. für Sprachdialoge, erfordert die Verfügbarkeit von einer entsprechenden Funktionalität bzw. entsprechenden Ressourcen - im folgenden auch als IVR (interactive voice response)-Ressourcen bezeichnet - bei dem Telekommunikationsdienstleister bzw. Carrier. Bei Telekommunikationsdiensten benötigte IVR-Ressourcen umfassen beispielsweise Harwareelemente wie Rechenleistung und Speicherplatz sowie Softwareelemente wie Programmstrukturen zur automatischen Spracherkennung (ASR: automatic speech recognition) und zur Wandlung von Text zur Sprache (TTS: text to speech). Bei Diensten mit automatisierter Sprachausgabe wird im Regelfall eine Nutzdatenverbindung zwischen dem Teilnehmer und den IVR-Ressourcen geschaltet. Es ist die Aufgabe der Vermittlungstechnik, im Zuge der Dienststeuerung bedarfsabhängig diese Verbindung herzustellen. Die entsprechenden vermittlungstechnischen Funktionen werden von Vermittlungssystemen bereitgestellt. Für die Bereitstellung der benötigten Ressourcen gibt es abhängig vom Nutzdatenrouting verschiedene Lösungen:

Bei TDM (time division multiplexing) basierten Netzen wird der Nutzdatenstrom im Regelfall über das steuernde Vermittlungssystem bzw. den Vermittlungsknoten geführt. Daher werden vielfach bei TDM-Netzen die IVR-Ressourcen im oder bei einem Vermittlungsknoten bereitgestellt. Die Bereitstellung der mit Ansagendialogen verbundenen Basisfunktionen (Ausgeben von aufgenommener Sprache, Erkennen von DTMF (dual tone multiple frequency)-Eingaben, TTS und ASR) erfolgt z.B. durch im Vermittlungssystem integrierte Spezialeinrichtungen oder durch Vermittlungssystem-externe periphere Vorrichtungselemente - häufig mit Intelligent Peripherals bezeichnet - , die dem Vermittlungssystem vorgelagert sind.

Bei paketbasierten Netzen wird der Nutzdatenstrom im Regelfall nicht über das Vermittlungssystem geführt, sondern nur Steuernachrichten zum Aufbau und zur Steuerung der Nutzdatenverbindung. In paketbasierten Netzen werden daher IVR-Ressourcen häufig mit Hilfe eines Ressourcenservers (im folgenden IVR-Server genannt) zur Verfügung gestellt, der dem die Verbindung steuernden Vermittlungssystem zugeordnet ist.

Aus der EP 1156649 ist ein System ein Verfahren zur Bereitstellung von Sprachanwendungen bekannt. Das System bietet sprachbezogene Ressourcen und Funktionen für die gemeinsame Nutzung durch eine Mehrzahl von Dienstanbietern.

Die Entwicklung immer anspruchsvollerer Dienste, teilweise mit teilnehmerspezifischen Features, führen zu höheren Anforderungen an die IVR-Ressourcen bzw. an das IVR-System. Unter IVR-System ist dabei die Vorrichtung gemeint, die die IVR-Ressourcen umfasst. Dabei kann es sich z.B. um ein oder mehrere Intelligent Peripherals oder einen IVR-Server handeln, die optional durch weitere Content Server unterstützt werden. Besonders die Sprachverarbeitung, z.B. die Umwandlung von Text in Sprache und die Spracherkennung, bringen mit sich einen erheblichen Aufwand hinsichtlich Rechenleistung und Speicherplatz. Zudem wird mit zunehmender Komplexität der Dienste eine aufwändigere Software, verbunden mit erhöhten Kosten, erforderlich. Eine möglichst effiziente Ausnutzung der IVR-Ressourcen ist deswegen wünschenswert.

Die Erfindung hat zur Aufgabe, die Effizienz bei der Ausnutzung von durch IVR-Systeme bereitgestellten Ressourcen zu verbessern.

Die Aufgabe wird durch ein IVR-System nach Anspruch 1 und durch Verfahren nach Anspruch 13, 16 oder 21 gelöst.

Auf das erfindungsgemäße IVR-System hat mehr als ein Vermittlungssystem Zugriff. Das IVR-System umfasst Ressourcen und Funktionen, die für mehr als ein Vermittlungssystem nutzbar sind. Jedes der zugreifenden Vermittlungssysteme hat ausschließlichen schließlichen Zugriff auf wenigstens eine Steuerschnittstelle des IVR-Systems. Das IVR-System weist Nutzdatenschnittstellen für die durch die Vermittlungssysteme zu vermittelnden Nutzdaten auf und ist mit Mitteln zur Erkennung und Behandlung bzw. Steuerung von Ressourcen-Engpässen versehen (Anspruch 1). Durch die Administration des IVR-Systems kann sichergestellt werden, dass jedes Vermittlungssystem nur über die ihm zugeordnete Steuerschnittstelle bzw. Steuerschnittstellen Steuerbefehle für die von ihm herangeführten Nutzdatenkanäle ausbringt. Dadurch kann z.B. ausgeschlossen werden, dass ein Vermittlungssystem einen Steuerbefehl an ein erfindungsgemäßes IVR-System generiert, der einen Port des IVR-Systems betrifft, der mit einem anderen Vermittlungssystem verbunden ist. Aus Sicht der Vermittlungssysteme ergibt sich hierdurch die Situation von einem exklusiv dem Vermittlungssystem zugeordneten IVR-System. Ebenso wie Steuerschnittstellen können auch Nutzdatenschnittstellen zugreifenden Vermittlungssystemen exklusiv zugeordnet sein (Anspruch 2). Die Nutzdatenschnittstellen können für TDM basierte Nutzdaten oder für paketbasierte Nutzdaten ausgelegt sein. In beiden Fällen kann zur Führung des Nutzdatenstroms einer Verbindung eines der Vermittlungssysteme (VST1, VST2) die Nutzdatenschnittstelle wenigstens einen über die Steuerschnittstelle adressierbaren Port umfassen, der bei paketbasierten Nutzdaten durch Adresszuordnung von Paketadressen definiert sein kann (Ansprüche 3 und 4). Da mehrere Vermittlungssysteme auf das erfindungsgemäße IVR-System zugreifen können und Ressourcen nutzen, ist die Ausnutzung der von dem System bereitgestellten Ressourcen besser. Im Regelfall wird man eine optimale Ausnutzung erreichen, wenn alle zugreifenden Vermittlungssysteme Zugriff auf sämtliche vom IVR-System bereitgestellte Ressourcen haben. Durch die exklusive Zuordnung von Steuerschnittstellen kann der Zugriff von Vermittlungssystemen hinsichtlich anderer zugreifender Vermittlungssysteme völlig transparent erfolgen. Für das zugreifende Vermittlungssystem stellt dann das IVR-System praktisch ein virtuelles IVR-System mit exklusiven Zugriff dar.

Besonders wenn die Ressourcen größere Kapazitäten beanspruchen, beispielsweise bei Diensten mit teilnehmerspezifisch angepassten Dialogen, kann eine dezentrale bzw. verteilte Anordnung der Ressourcen zu einer besseren Lastverteilung und leichteren Administration führen. Die Ressourcen können beispielsweise auf mehrere Intelligent Peripherals oder Server verteilt sein. Im Zuge einer Ressourcenaufteilung können beispielsweise von durch Vermittlungssysteme in dem IVR-System gestarteten Anwendungen auf einen Content Server, der beispielsweise Bildungsregeln und/oder Software für die Sprachbearbeitung umfasst, zugreifen (Anspruch 9). Beispielsweise können in diesem Fall zwei Server gegeben sein, ein IVR-Server und ein Content Server, wobei der IVR-Server Schnittstellen zu den Vermittlungssystemen aufweist und für das Ressourcenmanagement zuständig ist und auf den Content Server Bildungsvorschriften für die Abwicklung von (evtl. teilnehmerspezifischen) Dialogen zur Verfügung stehen. Die Auslagerung von Ressourcen auf einen Content Server kann z.B. der Vereinfachung der Administration dienen. Lizenzen der Server können als Netzlizenzen für eine Mehrzahl von IVR-Server bzw. Content Server organisiert sein, wobei die Lizenzen dynamisch reserviert und wieder freigegeben werden. Hierbei ist ein Zusammenfallen des Lizensierungsservers und eines Content Servers möglich (Anspruch 10).

Für den Fall, dass es bei dem Zugriff von Vermittlungssystemen zu Ressourcenengpässen in den IVR-System kommt, kann eines der erfindungsgemäßen Verfahren angewandt werden.

Bei dem ersten erfindungsgemäßen Verfahren wird eine durch ein Vermittlungssystem eingeleitete Anwendung in dem IVR-System angehalten, wenn die benötigten Ressourcen während der Abwicklung der Anwendung nicht zur Verfügung stehen. Die Anwendung wartet dann auf die Verfügbarkeit der benötigten Ressourcen. Wenn die Wartezeit einen Grenzwert überschreitet, ohne dass die benötigten Ressourcen zur Verfügung gestellt werden können, wird die Anwendung abgebrochen und eine Fehlermeldung an das zugehörige Vermittlungssystem übermittelt (Anspruch 13). Das erste erfindungsgemäße Verfahren hat den Vorteil einer effizienten Auslastung des erfindungsgemäßen IVR-Systems. Erst wenn wegen Ressourcenengpässen die Wartezeiten zu lang werden, kommt es zum Abbruch von Anwendungen.

Bei dem zweiten erfindungsgemäßen Verfahren werden längere Wartezeiten durch eine Reservierung von Ressourcen vermieden. Bei diesem Verfahren wird die Durchführung einer Anwendung von einem Vermittlungssystem bei dem IVR-System angefordert. Die für die Durchführung der Anwendung benötigten Ressourcen werden bestimmt und deren Verfügbarkeit überprüft. Wenn die benötigten Ressourcen zur Verfügung stehen, wird eine Reservierung durchgeführt und die Anwendung gestartet (Anspruch 16). Bei einem negativen Ergebnis der Überprüfung kann die Durchführung der Anwendung unmittelbar zurückgewiesen werden (Anspruch 17), oder die Anwendung wartet während eines begrenzten Zeitraumes auf die benötigten Ressourcen. Die Anwendung wird dann gestartet, wenn während der Wartezeit die benötigten Ressourcen frei werden und wird zurückgewiesen, wenn während des Zeitraums die angeforderten Ressourcen nicht verfügbar werden (Anspruch 18). Das zweite Verfahren hat den Vorteil, dass durch die Reservierung von Ressourcen Verzögerungen im Ablauf der Anwendung vermieden werden. Es lassen sich so genaue Angaben bezüglich der Dauer der Abarbeitung der Anwendung machen. Bei Zugriff auf mehrere IVR-Systeme durch ein Vermittlungssystem, z.B. bei einer Doppelung des IVR-Systems als Ausfallsicherung, kann für eine Anwendung, für welche keine ausreichenden Ressourcen in einem der IVR-Systeme reserviert werden können, ohne signifikanten Zeitverlust ein anderes IVR-System verwendet werden.

In einem erfindungsgemäßen IVR-System kann eines der beiden erfindungsgemäßen Verfahren generell für alle Anwendungen zum Einsatz kommen. Alternativ kann z.B. nach Maßgabe der anwendungsspezifischen Parameter bei einer Anwendung das eine oder das andere Verfahren zur Anwendung kommen (Anspruch 21). Die Auswahl des Verfahrens kann anforderungsspezifisch (maximale zulässige Verzögerung, Ressourcenbedarf ... ) erfolgen. Es ist auch denkbar, dass die Auswahl des Verfahrens nach Maßgabe anderer Parameter bzw. weiterer nichtanwendungsspezifischer Parmameter erfolgt. So können beispielsweise zu viele parallel laufende Anwendungen und damit eine ineffiziente Abarbeitung der Anwendungen verhindert werden, indem ab einen bestimmten Auslastungsgrad nur noch Anwendungen akzeptiert werden, für die die benötigten Ressourcen im vornherein reserviert werden können. D.h., ab einem bestimmten Auslastungsgrad des IVR-Systems kommt nur noch das zweite Verfahren zum Einsatz. Allgemein kann die parameterabhängige Auswahl des Verfahrens zur Behandlung von Ressourcenengpässen und/oder weitere Systemreaktionen auf den Abbruch einer Anwendung wie das ressourcenspezifische Festhalten von Abbruchgründen (z.B. zur statistische Auswertung) und die Benachrichtigung des Vermittlungssystems im IVR-System konfigurierbar sein (Anspruch 11). Beispielsweise kann auch eine Schwelle für Abbrüche vorgegeben werden, bei deren Überschreiten das Vermittlungssystem alarmiert und Gegenmaßnahmen angestoßen werden.

Andere vorteilhafte Weiterbildungen sind in den übrigen Unteransprüchen angegeben.

Das erfindungsgemäße IVR-System und die erfindungsgemäßen Verfahren werden im folgenden als Ausführungsbeispiel anhand von Figuren näher erläutert.

### Es zeigen

Figur 1: Ein erfindungsgemäßes IVR-System mit Doppelung der Komponenten.

Figur 2: Flussdiagramm für ein erfindungsgemäßes Verfahren.

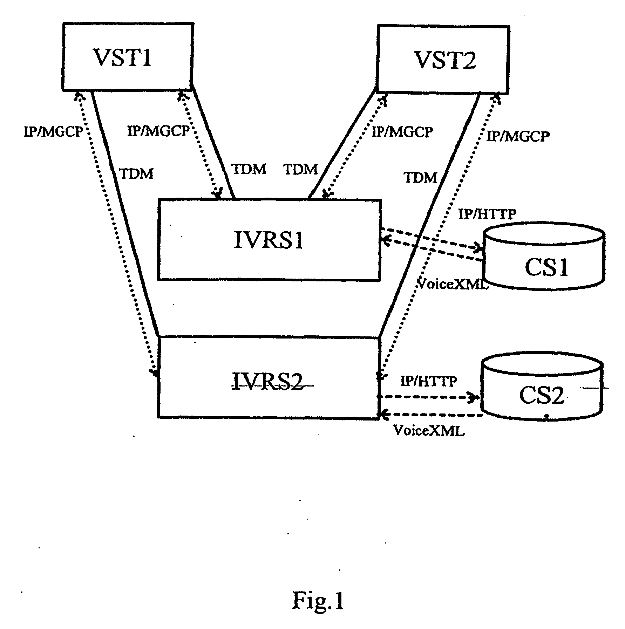

In Figur 1 sind zwei Vermittlungssysteme VST1 und VST2, zwei IVR-Server IVRS1 und IVRS2 sowie zwei Content Server CS1 und CS2 dargestellt. Die Doppelung der IVR-Server IVRS1 und IVRS2 und der Content Server CS1 und CS2 ist einerseits eine Sicherungsmaßnahme. Bei Ausfall eines Servers können die Aufgaben durch den anderen funktionsgleichen Server übernommen werden. Andererseits können als Übergangsmaßnahme Aufträge, die von einem IVR-System mangels Ressourcen nicht mehr bearbeitet werden können, an das andere IVR-System weitergeleitet werden. Die beiden Vermittlungssysteme VST1 und VST2 haben jeweils Zugriff auf beide IVR-Systeme. Steuernachrichten werden zwischen den Vermittlungssystemen VST1 und VST2 und den IVR-Systemen über ein IP (internet protocol)-Netz mit Hilfe des Media Gateway Control Protocols (MGCP) ausgetauscht (in der Figur durch das Bezugszeichen IP/MGCP und eine gepunktete Linie kenntlich gemacht). Eine mögliches anderes Protokoll ist das H.248 Protokoll. Der Austausch von Informationen bzw. Daten zwischen den IVR-Servern IVRS1 und IVRS2 und den Content Servern CS1 und CS2 wird über ein IP-Netz mit Hilfe des HTTP (hypertext transfer protocol) Protokolls durchgeführt (in der Figur durch das Bezugszeichen IP/HTTP und gestrichelte Linien kenntlich gemacht). Jedes der Vermittlungssysteme VST1 und VST2 führt eine feste Anzahl von TDM basierten 64 kbit/sec Kanälen - auch als DSO Kanäle bezeichnet - an die IVR-Server IVRS1 und IVRS2 heran (in der Figur durch das Bezugszeichen TDM und durchgezogene Linien kenntlich gemacht). Die Kanäle dienen dem Transport von Nutzdaten (Ansagen und Bedienereingaben) und terminieren im Falle von TDM Kanälen vermittlungssystemseitig sowie IVR-systemseitig an entsprechenden PCM30 (PCM: pulse code modulation) Schnittstellen. Alternativ können die Nutzdatenverbindungen auch eine Mehrzahl von RTP (real time protocol) Verbindungen betreffen, die über ein IP Netz herangeführt werden. Bei der Realisierung der Nutzdatenübertragung über ein paketorientiertes Netz würde im Regelfall der Nutzdatenstrom im Gegensatz zum in der Figur 1 gezeigten Fall der Übertragung über ein TDM Netz nicht über die Vermittlungsstellen VST1 und VST2 geführt werden. Über die MGCP-Schnittstelle adressiert jedes Vermittlungssystem nur die Ports der IVR-Server IVRS1 und IVRS2, an die es Verbindungsleitungen heranführt. Diese Verbindungsleitungen sind permanent durchgeschaltet. Für jedes der Vermittlungssysteme VST1 und VST2 sind Ports der IVR-Server IVRS1 und IVRS2, die mit weiteren Vermittlungssystemen verbunden sind, jeweils nicht eingerichtet und damit nicht adressierbar. Die Summe der an die IVR-Server IVRS1 und IVRS2 herangeführten Kanäle ist im allgemeinen größer als die in den IVR-Servern IVRS1 und IVRS2 verfügbare Anzahl bzw. Kapazität der verschiedenen Ressourcen der IVR-Server IVRS1 und IVRS2. Ressourcen werden im Regelfall nur von einem Teil der herangeführten Kanäle gleichzeitig in Anspruch genommen. Auf diese Weise können Ressourcen eingespart werden gegenüber einer Lösung, die jedem Vermittlungssystem einen eigenen IVR-Server exklusiv zuordnet, ohne dass der Zugriff auf Ressourcen durch die Vermittlungssysteme signifikant beeinträchtigt wäre. Als verschiedenartige Ressourcentypen können z.B. CPU-Leistungen, Speicher, TTS-Lizenzen, ASR-Lizenzen, Konferenzfunktionen etc. auftreten und beschränkt sein.

Jedes IVR-System hat gewisse Hardware- und Software-Ressourcen, namentlich eine gewisse Anzahl von Prozessorkarten und Schnittstellenkarten, die eine maximale Leistung zur Abarbeitung und Sprachsynthese, Spracherkennung, DTMF-Erkennung, Echokompensation etc. in einer gewissen Mischung bereitstellen können. Ferner sind die Möglichkeiten des parallelen Ablaufs der Spracherkennung, Sprachsynthese, Sprachenerkennung beschränkt durch die Anzahl der für das IVR-System erworbenen Lizenzen. Über die Steuerschnittstelle bringen die Vermittlungssysteme VST1 und VST2 Aufträge an die IVR-Systeme aus. Diese Aufträge referenzieren die auszugebenden Ansagen bzw. die durchzuführenden Dialoge und enthalten gewisse Steuerparameter, wie z.B. eine anzusagende Rufnummer, die Sprache, in der die Ausgabe erfolgen soll, oder den zeitlichen Abstand, in dem die Eingaben erwartet werden sollen. Der Ressourcenbedarf eines Auftrags ist in Vermittlungssystemen VST1 und VST2 jeweils unbekannt. Aus dem Auftrag gewinnt das adressierte IVR-System die tatsächlich auszuführenden elementaren Schritte zur Bereitstellung von Ansage bzw. Dialogen. Hierzu ist eine Logik erforderlich, die auf einen Content Server CS1 bzw. CS2 ausgelagert ist. Diese Logik erstellt aus den Auftragsparametern die vollständige Vorschrift zur Generierung von Ansage bzw. Dialogen. Im Ausführungsbeispiel ist dies eine VoiceXML-Seite bzw. VoiceXML Bildungsregeln, die alle auszugebende Aufnahmefragmente oder vorzulesenden Textdateien referenzieren. Die VoiceXML Bildungsregeln werden an den IVR-Server IVRS1 bzw. IVRS2 übermittelt (in der Figur 1 durch das Bezugszeichen VoiceXML kenntlich gemacht) und sodann vom IVR-System abgearbeitet.

Nach Generierung der Vorschrift zur Bereitstellung von Ansage oder Dialog kommt eines der erfindungsgemäßen Verfahren zur Anwendung. Bei einer Vorgehensweise entsprechend dem ersten erfindungsgemäßen Verfahren beginnt das IVR-System mit der Abarbeitung der Vorschrift. Das heißt zum Beispiel, eine Ansage wird auf dem vom Vermittlungssystem VST1 bzw. VST2 gewünschten Port gespielt, Echokompensation wird hierfür aktiviert und ein Spracherkenner für gewisse Schlüsselwörter aktiviert. Sollte bei der Abarbeitung der Vorschrift ein Ressourcenengpass auftreten, z.B. zum Zeitpunkt des Bedarfs kein Spracherkenner mehr verfügbar sein, da die maximale Anzahl der Lizenzen schon für andere Aufträge ausgenutzt ist, so wird gegebenenfalls nach einer geringen Wartezeit zur Verifizierung der dauerhaften Nichtverfügbarkeit der geforderten Ressource der Abbruch des Auftrags mit entsprechender Abbruchsmeldung bzw. Fehlermeldung an das Vermittlungssystem erfolgen. Die Verifizierung der Nichtverfügbarkeit der gewünschten Ressource erfolgt durch ein zeitüberwachtes Warten auf die Verfügbarkeit (Warten am Semaphore) oder ein wiederholtes Überprüfen der Verfügbarkeit (Polling). Die Tatsache und der Grund des Abbruchs werden im IVR-System zur statistischen Bewertung und Information des Netzbetreibers hinterlegt. Mit dem in Richtung Vermittlungssystem signalisierten Abbruch des Auftrags erfolgt das Auslösen der zugehörigen Verbindung durch das Vermittlungssystem VST1 bzw. VST2.

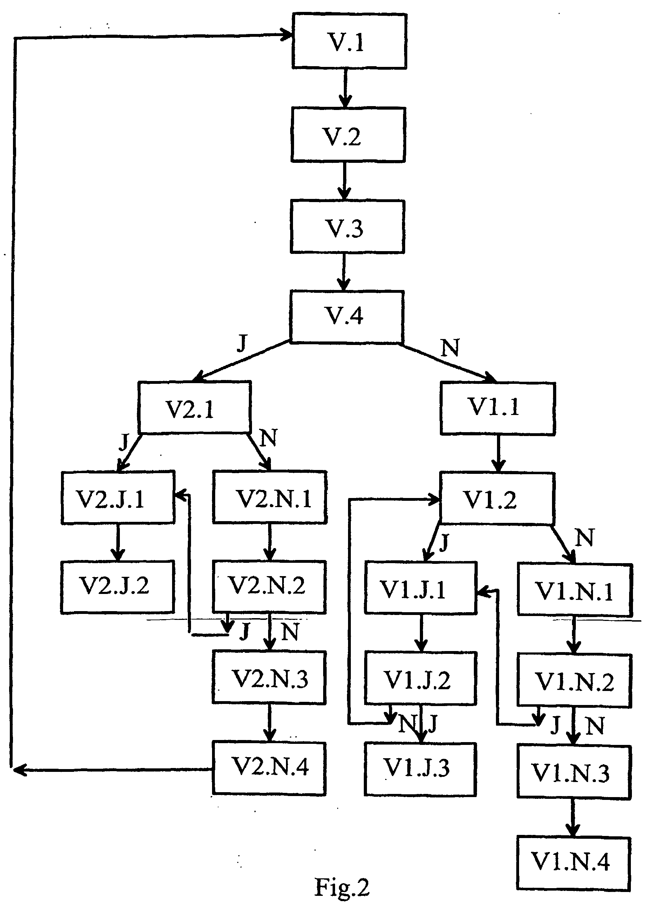

Bei einer Vorgehensweise entsprechend dem zweiten erfindungsgemäßen Verfahren werden alle benötigten Ressourcen vor Auftragsbearbeitung im IVR-System reserviert. Sollte eine Ressource nicht dauerhaft verfügbar sein, erfolgt gegebenenfalls nach einer geringen Wartezeit zur Verifizierung der dauerhaften Nichtverfügbarkeit der geforderten Ressource die Zurückweisung des Auftrags mit entsprechender Meldung an das Vermittlungssystem VST1 bzw. VST2. Die Tatsache der Auftragsrückweisung wegen Ressourcenmangels wird zusammen mit sich auf den Ressourcenmangel beziehenden Angaben im IVR-System zur statistischen Bewertung und Information des Netzbetreibers hinterlegt. Da der Auftrag noch nicht begonnen wurde, kann das Vermittlungssystem ein Rerouting auf ein anderes Port eines weiteren IVR-Systems durchführen und den gleichen Auftrag an dieses weitere IVR-System senden, womit sich die Erfolgsquote der Anforderung weiter erhöht. Im Falle des gedoppelten IVR-Systems von Figur 2 kann das jeweils das andere IVR-System sein. Können alle für den Auftrag erforderlichen Ressourcen a priori reserviert werden, so erfolgt die Abarbeitung des Auftrags durch das IVR-System. Während der Abarbeitung des Auftrags werden nicht mehr benötigte Ressourcen schrittweise freigegeben.

Neben der Möglichkeit, dass eines der beiden dargestellten erfindungsgemäßen Verfahren, z.B. administriert im IVR-System, generell für alle Aufträge bzw. Anwendungen zum Einsatz kommt, können auch die beiden Verfahren kombiniert werden. Die Auswahl der Verfahrensweise bzw. des Verfahrens erfolgt dann auftragsspezifisch, z.B. gebunden an die Auftragsnummer oder an anwendungsspezifische Parameter. Alternativ kann die Auswahl nach Maßgabe von Zustandsparametern des IVR-Systems, evtl. in Verbindung mit auftragsspezifischen Parametern, erfolgen.

Figur 2 zeigt ein Flussdiagramm von einer kombinierten Anwendung beider Verfahren. Das Flussdiagramm umfasst folgende Schritte:
V.1: Von dem Vermittlungssystem wird ein IVR-Port ausgewählt und ein Auftrag an das entsprechende IVR-System ausgegeben. Für den Auftrag wird das MGCP-Protokoll verwendet.
V.2: Im IVR-System werden dann in einem zweiten Schritt die Auftragsparameter an den Logikserver bzw. Content Server weitergegeben. Dies geschieht mit Hilfe des HTTP-Protokolls.
V.3: Der Logikserver bzw. Content Server erstellt eine Abarbeitungsvorschrift in VoiceXML, die an das IVR-System übermittelt wird.
V.4: Mit Hilfe der vom Logikserver erhaltenen Abarbeitungsvorschrift ermittelt das IVR-System die erforderlichen Ressourcen. Auftragsabhängig wird bestimmt, ob eine Vorreservierung aller benötigten Ressourcen erforderlich ist. Falls die Vorreservierung aller benötigter Ressourcen nicht erforderlich ist (im Flussdiagramm durch ein N gekennzeichnet), wird der erste Schritt V1.1 des ersten erfindungsgemäßen Verfahrens durchgeführt. Anderenfalls (durch ein J gekennzeichnet) wird der erste Schritt V2.1 des zweiten erfindungsgemäßen Verfahrens durchgeführt.
V1.1: Der Auftrag wird gestartet. Die benötigten Ressourcen werden schrittweise reserviert.
V1.2: Durch das IVR-System wird überprüft, ob die benötigten Ressourcen bei Bedarf zur Verfügung stehen. Wenn die benötigten Ressourcen bei Bedarf verfügbar sind (J), wird mit Schritt V1.J.1 fortgefahren. Im anderen Fall (N) folgt Schritt V1.N.1.
V1.J.1: Die Abarbeitung des Auftrages wird fortgesetzt. Die benötigten Ressourcen werden schrittweise freigegeben.
V1.N.1: Bei Nichtverfügbarkeit der benötigten Ressourcen wird ein zeitbegrenztes Warten auf die benötigten Ressourcen eingeleitet.
V1.N.2: Das IVR-System misst die Wartezeit. Wenn beim Warten auf die benötigten Ressourcen ein Grenzwert für die Wartezeit überschritten wird, ohne dass sie zur Verfügung gestellt werden können (N), folgt Schritt V1.N.3. Anderenfalls (J) wird mit Schritt V1.J.1 fortgefahren.
V1.N.3: Der Auftrag wird abgebrochen und das Vermittlungssystem informiert.
V1.N.4: Das Vermittlungssystem löst die Verbindung zu dem IVR-System aus.
V1.J.2: Wenn das IVR-System den Auftrag erfolgreich beendet (J), folgt Schritt V1.J.3. Im anderen Fall (N) wird das Verfahren mit Schritt V1.2, d.h. mit der Abarbeitung des Auftrags und der bedarfsabhängigen Überprüfung der Verfügbarkeit der benötigten Ressourcen fortgesetzt.
V1.J.3: Bei erfolgreicher Beendigung des Auftrags wird eine entsprechende Nachricht an das Vermittlungssystem übermittelt.
V2.1: Bei der zweiten Vorgehensweise bzw. beim zweiten Verfahren wird eine Reservierung aller benötigten Ressourcen vor der Abarbeitung des Auftrages versucht. Wenn alle benötigten Ressourcen zur Verfügung stehen und deren Reservierung erfolgreich durchgeführt wird (J), wird das Verfahren mit Schritt V2.J.1 fortgesetzt. Im anderen Fall (N) folgt Schritt V2.N.1.
V2.J.1: Wenn alle benötigten Ressourcen verfügbar sind, wird nach der Reservierung der Auftrag abgearbeitet.
V2.J.2: Bei Beendigung des Auftrags wird eine Nachricht an das Vermittlungssystem mit dem Auftragsergebnis gesendet.
V2.N.1: Bei Nichtverfügbarkeit aller benötigter Ressourcen wird ein zeitbegrenztes Warten auf die Ressourcen eingeleitet.
V2.N.2: Es wird überprüft, ob die Ressourcen verfügbar werden. Wenn vor Erreichen eines Grenzwertes für die Wartezeit die Ressourcen verfügbar werden (J), wird mit Schritt V2.J.1, d.h. der Reservierung der Ressourcen und dem Start des Auftrags fortgefahren. Anderenfalls (N) folgt Schritt V2.N.3.
V2.N.3: Der Auftrag wird zurückgewiesen und das Vermittlungssystem informiert.
V2.N.4: Von dem Vermittlungssystem kann dann ein Rerouting auf ein anderes IVR-System, z.B. das zweite bzw. Ersatz-IVR-System in Figur 1, erfolgen.

Auftragsabbruch bzw. Zurückweisung aufgrund von Ressourcenmangel wird ressourcenspezifisch im IVR-System erfasst und kann vom Bediener abgerufen werden. Wird eine zu hohe Rate von Auftragsabbrüchen bzw. Zurückweisungen pro Zeit festgestellt, so kann ein freilaufender Bedienerhinweis oder ein Alarm generiert werden.Die Schwellenwerte zur Bedienerinformation sowie die zugehörigen Zeitintervalle genauso wie die Art der Systemreaktion in Richtung Bediener sind hierbei konfigurierbar.

## Patentansprüche

1. IVR-System (interactive voice response system) zur Bereitstellung von Ressourcen für Dienste, die interaktive Sprachausgabe oder das Ausgeben von Ansagen umfassen, in dem
- mehr als ein Vermittlungssystem (VST1, VST2) Zugriff auf das IVR-System hat,
- jedes zugreifende Vermittlungssystem (VST1, VST2) ausschließlichen Zugriff auf wenigstens eine Steuerschnittstelle des IVR-Systems hat,
- Nutzdatenschnittstellen für die durch die Vermittlungssysteme (VST1, VST2) vermittelten Nutzdaten angeordnet sind, und
- Ressourcen des IVR-Systems von mehr als einem Vermittlungssystem (VST1, VST2) mit Zugriff nutzbar sind,
**dadurch gekennzeichnet, dass**
- das IVR-System Mittel zur Erkennung und Behandlung von Ressourcenengpässen umfasst.

2. IVR-System nach Anspruch 1,
**dadurch gekennzeichnet,**
**dass** jedes zugreifende Vermittlungssystem (VST1, VST2) ausschließlichen Zugriff auf wenigstens eine Nutzdatenschnittstelle des IVR-Systems hat.

3. IVR-System nach Anspruch 1 oder 2,
**dadurch gekennzeichnet,**
- **dass** wenigstens über eine Nutzdatenschnittstelle TDMbasierte Nutzdaten übertragbar sind, und
- **dass** zur Führung des Nutzdatenstroms einer Verbindung eines der Vermittlungssysteme (VST1, VST2) die Nutzdatenschnittstelle wenigstens einen über die Steuerschnittstelle adressierbaren Port umfasst.

4. IVR-System nach Anspruch 1 oder 2,
**dadurch gekennzeichnet,**
- **dass** wenigstens über eine Nutzdatenschnittstelle paketbasierte Nutzdaten übertragbar sind, und
- **dass** zur Führung des Nutzdatenstroms einer Verbindung eines der Vermittlungssysteme (VST1, VST2) die Nutzdatenschnittstelle wenigstens einen über die Steuerschnittstelle adressierbaren Port umfasst.

5. IVR-System nach einem der vorhergehenden Ansprüche,
**dadurch gekennzeichnet,**
- **dass** wenigstens über eine der Steuerschnittstellen paketorientierte Steuerdaten übertragbar sind, und
- **dass** das MGCP (Media Gateway Control Protocol) Protokoll oder das H.248 Protokoll für die Übermittlung von Steuerdaten zur Steuerschnittstelle gegeben ist.

6. IVR-System nach einem der vorhergehenden Ansprüche,
**dadurch gekennzeichnet,**
- **dass** die Ressourcen wenigstens eine der folgenden Ressourcen umfassen: Rechenleistung, Speicher, TTS-Lizenzen und ASR-Lizenzen.

7. IVR-System nach einem der vorhergehenden Ansprüche,
**dadurch gekennzeichnet,**
- **dass** das IVR-System zur Bereitstellung von Rechnerleistung, Speicher sowie Nutzdaten- und Steuerschnittstellen wenigstens einen IVR-Server (IVRS1, IVRS2) umfasst.

8. IVR-System nach einem der vorhergehenden Ansprüche,
**dadurch gekennzeichnet,**
**dass** das IVR-System in einem oder mehreren Vermittlungssystem-externen peripheren Vorrichtungselementen (Intelligent Peripherals) realisiert ist.

9. IVR-System nach einem der vorhergehenden Ansprüche,
**dadurch gekennzeichnet,**
- **dass** das IVR-System einen Content Server (CS1, CS2) mit Bildungsregeln und/oder Software für die Sprachbearbeitung umfasst.

10. IVR-System nach Anspruch 9,
**dadurch gekennzeichnet,**
**dass** der Content Server (CS1, CS2) zugleich die Funktionen eines Lizensierungsservers umfasst.

11. IVR-System nach einem der vorhergehenden Ansprüche,
**dadurch gekennzeichnet,**
**dass** das IVR-System bezüglich der Systemreaktion auf Überlastung und/oder Überbuchung konfigurierbar ist.

12. IVR-System nach einem der vorhergehenden Ansprüche,
**dadurch gekennzeichnet,**
**dass** das IVR-System redundante Vorrichtungselemente umfasst.

13. Verfahren zur Behandlung von Ressourcenengpässen in einem IVR-System nach Anspruch 1, bei dem
- durch ein Vermittlungssystem (VST1, VST2) in dem IVR-System eine Anwendung gestartet wird, die Ressourcen erfordert,
- die Anwendung bei Nicht-Verfügbarkeit benötigter Ressourcen des IVR-Systems angehalten wird,
- die Anwendung abgebrochen wird, wenn im Zuge des Wartens auf Ressourcen die Anwendung während eines Zeitraums angehalten wird, der einen Grenzwert überschreitet, und
- an das Vermittlungssystem (VST1, VST2) im Falle eines Abbruchs eine Fehlermeldung übermittelt wird.

14. Verfahren nach Anspruch 13,
**dadurch gekennzeichnet,**
**dass** von dem IVR-System auf einen Content Server (CS1, CS2) mit Bildungsregeln und/oder Software für die Sprachbearbeitung zugegriffen wird.

15. Verfahren nach Anspruch 13 oder 14,
**dadurch gekennzeichnet,**
**dass** bei einem Abbruch der Anwendung ein dem Abbruch zugrundeliegender Ressourcenmangel erfasst wird.

16. Verfahren zur Behandlung von Ressourcenengpässen in einem IVR-System nach Anspruch 1, bei dem
- von einem Vermittlungssystem (VST1, VST2) die Durchführung einer Anwendung in dem IVR-System angefordert wird,
- die für die Durchführung der Anwendung benötigten Ressourcen des IVR-Systems bestimmt werden,
- die Verfügbarkeit der benötigten Ressourcen überprüft wird, und
- die benötigten Ressourcen reserviert und eine Anwendung gestartet wird, wenn die Überprüfung ein positives Ergebnis hat.

17. Verfahren nach Anspruch 16,
**dadurch gekennzeichnet,**
**dass** die Durchführung der Anwendung zurückgewiesen und eine Fehlermeldung an das Vermittlungssystem (VST1, VST2) übermittelt wird, wenn die Überprüfung ein negatives Ergebnis hat.

18. Verfahren nach Anspruch 16,
**dadurch gekennzeichnet,**
- **dass** bei einem negativen Ergebnis der Überprüfung die Anwendung während eines begrenzten Zeitraumes auf die benötigten Ressourcen wartet,
- **dass** bei Verfügbarkeit der benötigten Ressourcen diese reserviert und die Anwendung gestartet wird, und
- **dass** die Durchführung der Anwendung zurückgewiesen und eine Fehlermeldung an das Vermittlungssystem (VST1, VST2) übermittelt wird, wenn während des Zeitraums die angeforderten Ressourcen nicht verfügbar werden.

19. Verfahren nach einem der Ansprüche 16 bis 18,
**dadurch gekennzeichnet,**
- **dass** von dem IVR-System auf einen Content Server (CS1, CS2) mit Bildungsregeln und/oder Software für die Sprachbearbeitung zugegriffen wird.

20. Verfahren nach einem der Ansprüche 16 bis 19,
**dadurch gekennzeichnet,**
**dass** bei einem Abbruch der Anwendung ein dem Abbruch zugrundeliegender Ressourcenmangel erfasst wird.

21. Verfahren zur Behandlung von Ressourcenengpässen in einem IVR-System nach Anspruch 1, bei dem
- von einem Vermittlungssystem (VST1, VST2) die Durchführung einer Anwendung in dem IVR-System angefordert wird, und
- nach Maßgabe von einem oder mehreren Parametern das Verfahren nach Anspruch 12 oder das Verfahren nach Anspruch 15 für die Anwendung zum Einsatz kommt.

22. Verfahren nach Anspruch 21,
**dadurch gekennzeichnet,**
- **dass** der bzw. die Parameter einen für die Anwendung spezifischen Parameter oder einen sich auf die Auslastung des IVR-System beziehenden Parameter umfassen.

## Claims

1. IVR system (interactive voice response system) for supplying resources for services encompassing interactive voice response or output of announcements,
in which
- more than one switching system (VST1, VST2) has access to the IVR system,
- each accessing switching system (VST1, VST2) has exclusive access to at least one control interface of the IVR system,
- user data interfaces are provided for the user data switched by the switching systems (VST1, VST2),and
- resources of the IVR system are capable of being used by more than one switching system (VST1, VST2) having access,
**characterised in that**
- the IVR system comprises means for recognising and handling resource bottle necks.

2. IVR system according to claim 1,
**characterised in that**
each accessing switching system (VST1, VST2) has exclusive access to at least one user data interface of the IVR system.

3. IVR system according to claim 1 or 2,
**characterised in that**
- TDM based user data can be transferred at least over one user data interface, and
- in order to route the user data stream of a connection of one of the switching systems (VST1, VST2) the user data interface can comprise at least one port which is addressable by way of the control interface.

4. IVR system according to claim 1 or 2,
**characterised in that**
- packet based user data can be transferred at least over one user data interface, and
- in order to route the user data stream of a connection of one of the switching systems (VST1, VST2) the user data interface can comprise at least one port which is addressable by way of the control interface.

5. IVR system according to one of the preceding claims,
**characterised in that**
- packet oriented control data can be transferred at least over one of the control interfaces, and
- the MGCP (Media Gateway Control Protocol) protocol or the H.248 protocol is defined for the transfer of control data to the control interface.

6. IVR system according to one of the preceding claims,
**characterised in that**
- the resources comprise at least one of the following resources: computing power, storage space, TTS licenses and ASR licenses.

7. IVR system according to one of the preceding claims,
**characterised in that**
- in order to provide computer power, storage space and also user data and control interfaces the IVR system comprises at least one IVR server (IVRS1, IVRS2).

8. IVR system according to one of the preceding claims,
**characterised in that**
the IVR system is implemented in one or more peripheral device elements external to the switching system (intelligent peripherals).

9. IVR system according to one of the preceding claims,
**characterised in that**
- the IVR system comprises a content server (CS1, CS2) with formation rules and/or software for speech handling.

10. IVR system according to claim 9,
**characterised in that**
the content server (CS1, CS2) simultaneously comprises the functions of a licensing server.

11. IVR system according to one of the preceding claims,
**characterised in that**
the IVR system can be configured in respect of the system response to overloading and/or overbooking.

12. IVR system according to one of the preceding claims,
**characterised in that**
the IVR system comprises redundant device elements.

13. Method for handling resource bottlenecks in an IVR system according to claim 1, in which
- an application which requires resources is started by a switching system (VST1, VST2) in the IVR system,
- the application is halted if resources required in the IVR system are not available,
- the application is terminated abnormally if whilst waiting for resources the application is halted for a period of time which exceeds a limit value, and
- an error message is sent to the switching system (VST1, VST2) in the event of an abnormal termination.

14. Method according to claim 13,
**characterised in that**
access is made by the IVR system to a content server (CS1, CS2) with formation rules and/or software for speech handling.

15. Method according to claim 13 or 14,
**characterised in that**
in the event of an abnormal termination of the application a lack of resources underlying the abnormal termination is recorded.

16. Method for handling resource bottlenecks in an IVR system according to claim 1, in which
- the execution of an application in the IVR system is requested by a switching system (VST1, VST2),
- the resources required in the IVR system for the execution of the application are determined,
- the availability of the required resources is checked, and
- the required resources are reserved and an application is started if the check has a positive result.

17. Method according to claim 16,
**characterised in that**
the execution of the application is rejected and an error message is sent to the switching system (VST1, VST2) if the check has a negative result.

18. Method according to claim 16,
**characterised in that**
- in the event of the check yielding a negative result the application waits for the required resources for a limited period of time,
- if the required resources are available these resources are reserved and the application is started, and
- the execution of the application is rejected and an error message is sent to the switching system (VST1, VST2) if the required resources do not become available during the period of time.

19. Method according to one of claims 16 to 18,
**characterised in that**
- access is made by the IVR system to a content server (CS1, CS2) with formation rules and/or software for speech handling.

20. Method according to one of claims 16 to 19,
**characterised in that**
in the event of an abnormal termination of the application a lack of resources underlying the abnormal termination is recorded.

21. Method for handling resource bottlenecks in an IVR system according to claim 1, in which
- the execution of an application in the IVR system is requested by a switching system (VST1, VST2), and
- according to one or more parameters, the method according to claim 12 or the method according to claim 15 is used for the application.

22. Method according to claim 21,
**characterised in that**
- the parameter comprises, or the parameters include, a parameter specific to the application or a parameter relating to the loading on the IVR system.

## Revendications

1. Système IVR (interactive voice response system) pour la mise à disposition de ressources pour des services qui comprennent une émission vocale interactive ou l'émission d'annonces parlées, dans lequel
- plus d'un système de commutation (VST1, VST2) a accès au système IVR,
- chaque système de commutation accédant (VST1, VST2) a accès exclusif à au moins une interface de commande du système IVR,
- des interfaces de données utiles sont disposées pour les données utiles commutées par les systèmes de commutation (VST1, VST2) et
- des ressources du système IVR sont utilisables par plus d'un système de commutation (VST1, VST2) avec accès,
**caractérisé en ce que** le système IVR comprend des moyens de reconnaissance et de traitement de goulots d'étranglement de ressources.

2. Système IVR selon la revendication 1,
**caractérisé en ce que**
chaque système de commutation accédant (VST1, VST2) a accès exclusif à au moins une interface de données utiles du système IVR.

3. Système IVR selon la revendication 1 ou 2,
**caractérisé en ce que**
- des données utiles à base TDM peuvent être transmises au moins via une interface de données utiles et
- l'interface de données utiles comprend au moins un port adressable via l'interface de commande pour guider le flux de données utiles d'une connexion de l'un des systèmes de commutation (VST1, VST2).

4. Système IVR selon la revendication 1 ou 2,
**caractérisé en ce que**
- des données utiles à base de paquets peuvent être transmises au moins via une interface de données utiles et
- l'interface de données utiles comprend au moins un port adressable via l'interface de commande pour guider le flux de données utiles d'une connexion de l'un des systèmes de commutation (VST1, VST2).

5. Système IVR selon l'une des revendications précédentes,
**caractérisé en ce que**
- des données de commande orientées paquets peuvent être transmises au moins via l'une des interfaces de commande et
- on a le protocole MGCP (Media Gateway Control Protocol) ou le protocole H.248 pour la transmission de données de commande vers l'interface de commande.

6. Système IVR selon l'une des revendications précédentes,
**caractérisé en ce que**
- les ressources comprennent au moins l'une des ressources suivantes: puissance informatique, mémoire, licences TTS et licences ASR.

7. Système IVR selon l'une des revendications précédentes,
**caractérisé en ce que**
- le système IVR pour la mise à disposition d'une puissance informatique, d'une mémoire ainsi que d'interfaces de commande et de données utiles comprend au moins un serveur IVR (IVRS1, IVRS2).

8. Système IVR selon l'une des revendications précédentes,
**caractérisé en ce que**
le système IVR est réalisé dans un ou plusieurs éléments de dispositifs périphériques externes au système de commutation (Intelligent Peripherals).

9. Système IVR selon l'une des revendications précédentes,
**caractérisé en ce que**
- le système IVR comprend un Content Server (CS1, CS2) avec des règles de formation et/ou un logiciel pour le traitement vocal.

10. Système IVR selon la revendication 9,
**caractérisé en ce que**
le Content Server (CS1, CS2) comprend en même temps les fonctions d'un serveur de licenciation.

11. Système IVR selon l'une des revendications précédentes,
**caractérisé en ce que**
le système IVR est configurable pour ce qui est de la réaction du système à la surcharge et/ou à la surréservation.

12. Système IVR selon l'une des revendications précédentes,
**caractérisé en ce que**
le système IVR comprend des éléments de dispositifs redondants.

13. Procédé de traitement de goulots d'étranglement de ressources dans un système IVR selon la revendication 1, dans lequel
- une application qui exige des ressources est lancée par un système de commutation (VST1, VST2) dans le système IVR,
- l'application est arrêtée en cas de non-disponibilité de ressources requises du système IVR,
- l'application est interrompue lorsque, dans le cadre de l'attente de ressources, l'application est arrêtée pendant une période qui dépasse une valeur limite et
- un message d'erreur est transmis au système de commutation (VST1, VST2) en cas d'interruption.

14. Procédé selon la revendication 13,
**caractérisé en ce que**
le système IVR accède au Content Server (CS1, CS2) avec des règles de formation et/ou un logiciel pour le traitement vocal.

15. Procédé selon la revendication 13 ou 14,
**caractérisé en ce que**,
en cas d'interruption de l'application, un défaut de ressources à la base de l'interruption est saisi.

16. Procédé de traitement de goulots d'étranglement de ressources dans un système IVR selon la revendication 1, dans lequel
- un système de commutation (VST1, VST2) demande l'exécution d'une application dans le système IVR,
- il est procédé à la détermination des ressources du système IVR requises pour l'exécution de l'application,
- il est procédé à la vérification de la disponibilité des ressources requises et
- il est procédé à la réservation des ressources requises et au lancement d'une application lorsque la vérification a un résultat positif.

17. Procédé selon la revendication 16,
**caractérisé en ce que**
l'exécution de l'application est refusée et un message d'erreur est transmis au système de commutation (VST1, VST2) lorsque la vérification a un résultat négatif.

18. Procédé selon la revendication 16,
**caractérisé en ce que**
- en cas de résultat négatif de la vérification l'application attend les ressources requises pendant une période limitée,
- si les ressources requises sont disponibles, il est procédé à la réservation de celles-ci et au lancement de l'application et
- l'exécution de l'application est refusée et un message d'erreur est transmis au système de commutation (VST1, VST2) si les ressources demandées ne sont pas disponibles pendant la période.

19. Procédé selon l'une des revendications 16 à 18,
**caractérisé en ce que**
- le système IVR accède a un Content Server (CS1, CS2) avec des règles de formation et/ou un logiciel pour le traitement vocal.

20. Procédé selon l'une des revendications 16 à 19,
**caractérisé en ce que**,
en cas d'interruption de l'application, un défaut de ressources à la base de l'interruption est saisi.

21. Procédé de traitement de goulots d'étranglement de ressources dans un système IVR selon la revendication 1, dans lequel
- un système de commutation (VST1, VST2) demande l'exécution d'une application dans le système IVR et
- le procédé selon la revendication 12 ou le procédé selon la revendication 15 est mis en oeuvre pour l'application conformément à un ou plusieurs paramètres.

22. Procédé selon la revendication 21,
**caractérisé en ce que**
- le resp. les paramètres comprennent un paramètre spécifique à l'application ou un paramètre qui se réfère à l'exploitation du système IVR.
